# EUROPEAN PATENT APPLICATION

(11) **EP 2 520 464 A2**
(43) Date of publication of application: **07.11.2012**
(21) Application number: 12165940.3
(22) Date of filing: 27.04.2012
(51) Int. Cl.: B60R 9/042, B60R 9/10

(54) **Roof Rack**

(30) Priority: 03.05.2011 GB 201107254
(71) Applicant: The University of Wolverhampton, Wolverhampton, West Midlands WV1 1LY (GB)
(72) Inventor: White, Martin, Podimore, Somerset BA22 8JE (GB)
(74) Representative: Gosnall, Toby

(57) **Abstract**

A roof rack comprising a chassis and at least one attachment portion, the chassis being rotationally attached to each attachment portion and each attachment portion being arranged in use to cooperate with a roof bar (20) traversing the width of a vehicle roof and where further each attachment portion is arranged in use to:
- be movable along the roof bar (20) with which it cooperates allowing displacement of the position of the chassis relative to the vehicle roof and,
- allow rotation of the chassis about the attachment portion to allow re-orientation of the chassis relative to the vehicle roof,
the combination of the displacement and re-orientation allowing the chassis to be moved between loading and secured positions.

## Description

The present invention relates to roof racks. More specifically the invention relates to roof racks at least part of which are selectively moveable between loading and secured positions. The present invention may be particularly useful in the transportation of one or more bicycles, however the invention is not to be considered to be limited to such embodiments.

The transportation of bicycles and other equipment by a vehicle, as an external load, is typically done by using a carrier or rack which is attached to the roof, rear hatch door or tow bar. Loads attached to the rear of a vehicle can interfere with lighting, access to the rear of the vehicle and any towed trailer or caravan, they may also pose a hazard for parking and be dangerous to other road users in a collision. Loads attached to a tow bar will reduce the nose weight limit for any trailer also attached.

Placing bicycles and other loads upon the roof is beneficial as access and rear lighting are not restricted and the weight is better distributed between the vehicles axles, however standing bicycles upright upon a roof rack will impose a height restriction and deny the vehicle access to some car parks, ferries and beneath low bridges. Furthermore the fitment of bicycles or other loads to a rack secured to the roof of a vehicle will require significant human physical effort to raise the load and place it in position, possibly some distance above and forward of the lifting person's shoulders.

In addition, when placing a tall unstable load such as a bicycle upon the rack it must be held steady by one hand whilst it is secured in the upright position by the other. These exertions are arduous and can be detrimental to health. Therefore such racks are unattractive to many potential users, particularly those of short stature or who use taller vehicles such as 4x4's, MPV's and vans.

In accordance with an aspect of the invention a roof rack is provided comprising a chassis and at least one attachment portion, the chassis being optionally rotationally attached to each attachment portion and each attachment portion being optionally arranged in use to cooperate with a roof bar optionally traversing the width of a vehicle roof and where further each attachment portion is optionally arranged in use to:
- be optionally movable along the roof bar with which it cooperates allowing displacement of the position of the chassis relative to the vehicle roof and,
- optionally allow rotation of the chassis about the attachment portion to allow re-orientation of the chassis relative to the vehicle roof,
the combination of the displacement and re-orientation optionally allowing the chassis to be moved between loading and secured position.

Such a roof rack may allow better access for loading especially as it may allow rotation of the chassis through a larger angle than for example a system employing a static attachment portion where the chassis may for example move past an attachment portion.

In some embodiments movement of the chassis from the loading to the secured position and/or from the secured to the loading position may be assisted. The assistance may for example be provided by spring loading and may make operation of the roof rack more manageable.

In some embodiments the chassis comprises a nearside tubular element and an offside tubular element that in use are orientated substantially perpendicular to the roof bars. Such an arrangement may provide a solid base for the roof rack and facilitate chassis movement in the required directions.

In some embodiments, when the chassis is in the loading position it is braced against a side of the vehicle by a padded portion of the nearside element. This may assist with stability of the chassis as loading occurs and may also help to prevent damage to the vehicle.

In some embodiments the chassis comprises at least one transverse element which spans and joins the nearside tubular element and the offside tubular element. The transverse elements may add rigidity to the chassis and form the basis of attachments for a load.

In some embodiments the transverse elements are telescopically extendable. In this way when the roof rack is in use and the chassis is in its loading position, the transverse elements may be extended so as to contact the ground and support the chassis.

In some embodiments each transverse element is angled. As will be appreciated the angle in the transverse element may result from the transverse element being curved or at least having a change in direction along its longitudinal length. This may allow for there to be additional clearance between at least part of the transverse element and the vehicle.

In some embodiments the angle in the transverse element may be provided by a curved or angled neck region, proximate one end of the transverse element.

In some embodiments the curved or angled neck region results in a change of direction of the transverse element between approximately 60 and 110 degrees, preferably between 70 and 100 degrees, more preferably between 80 and 90 degrees and may be substantially 90 degrees.

In some embodiments the angle of each transverse element means that when in a loading position it projects from a plane defined by the nearside tubular element and the offside tubular element. It may be that when in use on a vehicle the direction of the projection from the plane is away from the vehicle in order to accommodate any intersection between the transverse elements and vehicle bodywork that might otherwise occur for example during displacement and/or re-orientation of the chassis. This may mean that the transverse elements are disposed outside the portion of an average vehicle contour contained between the nearside and offside elements. This may be particularly advantageous where the chassis is in the loading position as it may allow rotation of the chassis through a larger angle without its path being fouled by the vehicle roof.

In some embodiments each transverse element is substantially "L" shaped. This may be particularly advantageous for providing clearance as described above and/or for providing the basis of attachment points for a load such as one or more bicycles.

In some embodiments each transverse element is rotatable from its loading position to a folded position in which it is in substantially the same plane as the nearside tubular element and the offside tubular element. This may mean that when the roof rack is not in use for transporting a load the transverse elements may be folded away to reduce the space they require.

In some embodiments the attachment portion comprises a load bearing roller held between pairs of side plates, where in use the load bearing roller rests on top of the roof bar allowing rolling displacement of the chassis, and the side plates are positioned about the roof bar, joined by a pin that passes through matching holes in each side plate, the side plates retaining the roller on the roof bar. This arrangement may allow smooth displacement of the attachment portion and the chassis.

In some embodiments each pin acts as an axle for a locking roller eccentrically mounted between the end plates, the locking roller being rotatable in use so as to bear against the underside of the roof bar, in order that the roof bar is securable between the load bearing roller and the locking roller when the chassis is in its secured position. This may provide a convenient mechanism for a user to selectively secure/release the chassis.

In some embodiments the offside element passes through the side plates and through the centre of the load bearing roller acting as an axle to allow rotation of the chassis about the attachment portion. This may be a convenient method of allowing rotation of the chassis about the attachment portion.

In alternative embodiments the attachment portion may comprise a low friction block fitted to the offside element and arranged in use to slide along a groove in the roof bar allowing the displacement of the position of the chassis relative to the vehicle roof.

Further the fitting between the low friction block and the offside element may be rotatable, allowing the rotation of the chassis about the attachment portion to allow re-orientation of the chassis relative to the vehicle roof. The fitting allowing rotation may be provided by one or more plates attached to the low friction block and pivotally mounted to the offside element.

As an alternative to the eccentrically mounted locking roller, the locking roller may instead be mounted concentrically and locking of the chassis in its secured position may be achieved by an interference fit of the concentrically mounted locking roller with a wedge suitably positioned on the roof bar.

In some embodiments the roof rack further comprises at least one nearside mounting arranged to receive the nearside element when the chassis is in its secured position, the nearside mounting being attached in use to a nearside of a roof bar, each nearside mounting comprising a double ended square shaped "U" bolt and a retainer plate arranged to secure the roof bar there between. This attachment method may allow fitment to roof bars of various thicknesses without removal of the roof bar.

In alternative embodiments each nearside mounting may comprise a bracket arranged in use to be positioned between the roof bar and vehicle and secured by an attachment provided to secure the roof bar to the vehicle. This method may reduce the number of fixings and components required and again may be suitable for different types of roof bar.

In some embodiments the nearside mounting further comprises a securing means, attached in use to a nearside of a roof bar and arranged to be capable of selectively securing and releasing the nearside element when the chassis is in its secured position.

In some embodiments the securing means may comprise a hinged clamp arranged to selectively clasp the nearside element. The hinged clamp may be lockable. Alternatively the securing means may comprise a shaped receiver which may optionally further comprise a shutter bolt and hand wheel, the shutter bolt being arranged to selectively engage a threaded recess in the nearside element to secure it.

In some embodiments the roof rack is adapted to allow fitment to different roof bar arrangements. This may mean that the roof rack can be retrofitted to different roof bar designs.

In some embodiments one or more of the following adaptations are made to the roof rack:
- the roof rack may be arranged so that the joint between the transverse element and the nearside tubular element and/or the offside tubular element is adjustable so that the transverse element may be positioned at various points along said nearside tubular element and offside tubular element.
- the side plates may contain multiple pairs of matching holes at different distances from the load bearing roller, each pair capable of receiving the pin, such that in use the attachment portion is capable of accommodating roof bars of different thicknesses.
- the side plates may be a loose fitting on the offside element allowing them to be positioned at different points along the offside element, such that in use the attachment portion is capable of accommodating roof bars having different separations.
- the length of each "U" bolt may allow in use for fitting to varying depths of roof bars.
- the locking means may be arranged to be capable of selectively securing and releasing the nearside element at any point along its length, such that the locking means is capable of accommodating roof bars having different separations.

In some embodiments a bicycle support frame is provided, said frame comprising at least one arm attached to the nearside element and at least one channel having a substantially perpendicular orientation to the arm, the channel having moveable securing means for bicycle wheels. Such an arrangement may provide a desired level of support for one or more bicycles during loading and/or transport.

In some embodiments each arm of the frame is attached to the nearside element by rotational joints allowing the frame to be moved between loading and folded positions. This may mean that when the roof rack is not in use for transporting a load the frame may be folded away to reduce the space it requires.

In some embodiments the roof rack is arranged for carrying bicycles.

In the text above the terms nearside and offside have been used to identify features on different sides of a roof rack chassis, roof bar or vehicle. These terms should not be interpreted to limit the orientation of the chassis relative to a vehicle or user. Instead they are simply identifiers of opposite sides and do not require a particular side of the roof rack chassis, roof bar or vehicle.

According to another aspect the invention may be a roof rack for the carriage of bicycles or other loads. It may be designed to be attached to most proprietary, Original Equipment Manufacturer (OEM) or aftermarket roof bars. It may be movably fitted so that the near side may be detached and the rack may be rolled to the near side of the vehicle, across the roof and then whilst still supported on one side by roof bars, the rack is pivoted downwards until the padded nearside of the rack rests against the side of the vehicle. In this tipped or loading position, bicycles and other loads may then be easily attached or detached with minimal lifting or balancing.

For the safety of other road users, roof racks and their loads should not significantly overhang the roof of the vehicle. Thus proprietary roof bars are rarely wider than the roofs they are fitted to. Prior art in tipping racks of this kind typically use bespoke roof bars or telescopic track systems so as to be able to extend the pivoting edge beyond the normal end point of proprietary roof bars and thus maintain clearance between the tipped rack and the vehicle body.

The near and off sides of the rack according to this invention may be connected by transverse elements shaped so as to ensure that when it is in the loading position, the rack and its loads are kept clear of the vehicle body except for the padded contact area. Moving the loaded rack from the tipped position to the secured position may be accomplished by a person gripping the nearside of the rack and raising it until level with the roof bars, then sliding the rack horizontally across the roof bars. This action permits the lifter to maintain a healthy back posture and use their knees and leg muscles to do most of the work.

The mountings which attach this rack to the proprietary roof bars may be adjustable so as to accommodate a range of different cross section roof bars. The mountings may also be fixed at different points along the near and off side elements of the rack, thus allowing the rack to be fitted to various pairs of roof bars separated by different distances. Furthermore, the length of the transverse elements may be adjustable and the offside mountings may be lockable to the roof bars at any point. Thus the rack may fit roof bars with varying lengths between the front and rear roof bar fixings on a single vehicle. This condition will be encountered when the sides and/or longitudinal roof rails of the vehicle to which the roof bars are fixed, are not parallel.

In one embodiment the rack is used as a cycle carrier and has a frame attached to its nearside element with channels and fixings to secure the wheels of bicycles attached to the rack. This frame may be approximately horizontal in the loading position and close to vertical when the rack is secured to the roof bars. The fixings used to secure the bicycle wheels to this frame may be straps and buckles, over centre catches or similar easily released means.

Bicycle saddle and handlebar tubes may also be attached to the transverse elements connecting the sides of the rack or to the offside element. These attachments are in the form of rods or tubes with clamps at either end, the clamps being joined to the rods by fixings which allow articulation in one or more planes. The clamps may be located at various points along the offside element or transverse tubes and may be tightened by hand wheels which may allow for easy adjustment of the clamp position and securing/release of bicycles.

The transverse elements may be fixed to the side elements at varying points so as to better align with suitable fixing points on the bicycles and thus accommodate a broad range of bicycle frame shapes and sizes. In addition, the transverse elements may be adjustable for length to suit different loads and roof vehicle widths.

When the rack is attached to the vehicle but not transporting bicycles the frame and the transverse elements may be folded downwards to form a broadly flat structure so as to offers less wind resistance and minimised height restrictions. In other embodiments the frame for bicycle wheels may be removed and replaced with bespoke fixings for other items commonly transported on vehicle roofs, such as roof boxes, water craft, ski equipment etc.

In a further embodiment, the transverse elements each incorporate telescopic tubes which are extended and locked prior to moving the rack from the secured position to the loading position. These tubes may rest upon the ground in the loading position and support the rack clear of the side of the vehicle, they also allow the position of the bicycle wheel frame or other bespoke fittings to be placed at a low height for loading.

When not attached to a vehicle, the rack may be easily hung from a wall by two hooks that support the offside element whilst the padded nearside element rests against the wall and the transverse bars and clamp tubes are folded flat. The rack when wall mounted may also be used for the space efficient storage of bicycles or other loads.

The various elements of this rack may be connected by simple clamp or screw fittings so that it may be shipped and stored in a dismantled condition to make efficient use of space and packaging and yet be easily assembled by an unskilled user.

In particular embodiments the invention may offer one or more of the following advantages:
- The rack may place loads close to a vehicle's roof, minimising obstruction, height restriction and wind resistance. It may also distribute the load evenly upon the vehicle and its wheels.
- The rack may permit easy loading and unloading.
- The rack may be adjustable to be used with various dimension proprietary roof bars, set apart by various distances and also where the effective length of front and rear bar differs.
- The rack may be adjustable to place load attachments at points suitable to the load.
- The rack may have folding elements to reduce its fitted height and frontal area when not carrying a load.
- The rack may be fitted with telescopic legs to keep it clear of the vehicle side and make loading easier.
- The rack may be attached to a wall to facilitate space efficient storage for itself and attached bicycles or other loads using space which in a garage is typically under used.
- The rack may be designed for compact shipping and easy assembly.

The following clauses may give rise to additional and/or alternative aspects and embodiments of the invention:
Clause 1. A roof rack for vehicles consisting of round tubular nearside (1) and offside (2) elements adjustably joined by angled and adjustable length transverse elements (4), said roof rack is movably fitted to proprietary roof bars so that it may be held firmly in a secured position on top of the vehicle by locking means' attached to the nearside ends of the roof bars and by sliding or rolling means attaching the roof rack to the roof bars towards the vehicle's offside, thus the roof rack may be released from its nearside locking means and manually supported on the nearside whilst it is slid or rolled horizontally across the roof bars until limited by the sliding or rolling means contacting stops at the nearside, thereafter the roof rack is rotated about the offside element and downwards to the loading position whereupon padding (3) on the nearside element rests against the side of the vehicle, whilst the roof rack and any load attached to it remain clear of the vehicle structure by virtue of the angled transverse elements (4).
   As will be appreciated the nearside and offside elements may collectively be referred to as a chassis. Such a chassis may also incorporate other features such as the transverse elements.
   As will be appreciated the sliding or rolling means may also be referred to as an attachment portion which may itself optionally comprise additional features.
Clause 2. Transverse elements (4) according to Clause 1 are shaped similar to the letter "L" and in the loading position said transverse elements are disposed outside the portion of an average vehicle contour contained between the nearside and offside elements.
Clause 3. A roof rack according to Clause 1 with a frame (6) attached to the nearside element (2) said frame (6) comprising arms (14) extending outwards from the vehicle and joined by channels (7) displaced from and running parallel to the nearside element (1) and with movable securing means for bicycle wheels placed towards the ends of the channels (7).
Clause 4. Rolling means according to Clause 1 consisting of a load bearing roller (23) held between pairs of side plates (21)(22) said side plates having large holes at one end corresponding to the roller bore so that plates (21)(22) and roller (23) fit over the tubular offside element (1) and the side plates (21)(22) straddle and extend below the roof bars (20) where the side plates are joined by removable pins (26) that pass through matching pairs of small diameter holes (28).
Clause 5. Removable pins (26) according to Clause 4 may hold lower rollers (25)(30) between the side plates (21)(22) and at the loading position said removable pins (26) or lower rollers (25)(30) mounted thereon, limit horizontal movement of the rack by contact with the nearside roof bar attachment feet.
Clause 6. Sliding means according to Clause 1 consisting of shaped blocks of low friction material fitted to the offside member by pivot plates and located within undercut grooves within the top of roof bars made from extruded sections.
Clause 7. Transverse elements (4) according to Clauses 1 and 2 fixed to nearside and offside elements by axially aligned bolts (9)(13) secured by hand wheels permit rotation of the transverse element angled portion downwards into a folded position on substantially the same flat plane as the side members (1)(2).
Clause 8. Arms (14) of a frame (6) according to Clause 3 attach to the nearside element (2) by rotational joints with travel stops (16) allowing the frame (6) to be folded inwards towards the lowered transverse elements (4) according to Clause 7 and lie flat upon them.
Clause 9. Travel stops (16) according to Clause 8, limit the outward rotation of the arms
   according to Clause 8 so as to position the frame (6) close to horizontal when the rack is in the loading position and when the rack is in the secured position the uppermost part of the frame (6) is biased outwards from the vertical.
Clause 10. Arms (14) according to Clause 8 attached to the nearside element (2) by concentric sleeves (15), said arms (14) have slight bends (19) between the sleeves (15) and first cycle wheel channel (7), thus arm portions beyond the bends and the channels (7) secured to them lie in a flat plane parallel to and slightly above the folded transverse elements (4) according to Clause 7.
Clause 11. Bicycle wheel securing means according to Clause 3 consisting of straps and buckles or over centre catches.
Clause 12. A roof rack according to Clause 1 with movable attachment tubes or rods (5) with clamps at each end to secure bicycle frames to the offside member (1) and transverse elements (4) said clamps being joined to the tubes (5) by fixings which allow articulation in one or more planes.
Clause 13. A roof rack according to Clause 1 with attachments shaped to secure various items of leisure and working equipment.
Clause 14. A roof rack according to Clause 1 with transverse elements (46) containing telescopically extendable tubes (48) that may be extended to the nearside and locked to the transverse elements (46) at a suitable length so that when the rack is rotated to the loading position the extendable tubes (48) contact the ground and support the rack clear of the vehicle side.
Clause 15. A roof rack according to Clause 1 with transverse elements (55) that fit telescopically within tubes (56) that support attachment frames (6) according to Clause 3 and clamp tubes (5) according to Clause 12 or other attachments according to Clause 13, said tubes (56) extendable to the nearside and may be locked to the transverse elements (55) within, at a suitable length so that when the rack is rotated to the loading position the attached frames and loads are close to the ground.
Clause 16. A rack according to Clauses 14 and 15 has latching spigots (59) attached to the offside element (1) which engage with lugs (57) attached to the nearside mounting receivers (32)(39) when the rack is lowered into the loading position.
Clause 17. A rack according to Clause 15 with tension springs or gas struts connecting the telescopically joined assemblies.
Clause 18. Side plates (21)(22) according to Clause 4 have slightly convex inner faces, a large diameter hole at one end through which the nearside element (1) passes and several pairs of smaller holes (28) towards the opposite end to provide a range of positions for the removable pins (26).
Clause 19. Load bearing rollers (23) according to Clause 4 and their retaining pairs of side plates (21)(22) according to Clause 4 and 18 are a loose fitting on the offside member (1), so they may be positioned at different points along the offside member (1).
Clause 20. Lower rollers (25) according to Clause 5 are facet faced and eccentrically mounted on the removable pins (26).
Clause 21. As an alternative to rollers (25) according to Clause 20, removable pins (26) or lower rollers (30) concentrically mounted on them according to Clause 5, abut wedges (31) secured to the lower face of the roof bars (20) when the rack is in the secured position.
Clause 22. Rollers (23)(25)(30) according to Clause 4,5,19 and 20 are slightly barrel shaped.
Clause 23. A tubular offside member (1) according to Clause 1 has tight fitting end plug inserts (24) with heads slightly larger than the large holes in side plates (21)(22) according to Clause 4 and 18 so as to retain end plates (21)(22).
Clause 24. Locking means according to Clause 1 have receiving elements (32) and locking clamps (34) that will clasp any part of the nearside element (1).
Clause 25. Traverse elements (4) according to Clause 1 in two parts connected by a screw thread joint (12) to adjust their overall length.
Clause 26. Traverse elements (4) according to Clause 1 with end fittings (9)(10)(11)(13) that permit attachment to side elements(1)(2) at various points and rotation of the traverse elements (4) between said end fittings.
Clause 27. Traverse elements according to Clauses 14 and 15 consisting of telescopic tubes (46)(48) and (55)(56) with end fittings (9)(10)(13)(49)(53) that permit attachment to side elements(1)(2) at various points and rotation of the traverse elements between said end fittings.
Clause 28. A vehicle roof rack and variations thereof according to the above Clauses may be hung from two hooks attached to a wall for storage.
Clause 29. A vehicle roof rack and variations thereof according to Clause 28 used to store bicycles or other equipment attached to the racks.
Clause 30. A vehicle roof rack and variations thereof according to the above Clauses dismantles to occupy low volumes.
Clause 31. A vehicle roof rack and variations thereof substantially as described above with reference to the accompanying drawings.

The skilled person will appreciate that a feature described in relation to any one of the aspects of the invention may be applied mutatis mutandis to any other feature of the invention.

Embodiments of the invention will now be described by way of example only and with reference to the accompanying Figures in which:
**Figure 1** is a perspective view of a roof rack according to an embodiment of the invention in use on a vehicle;
**Figure 2** is a perspective view of a roof rack according to an embodiment of the invention in use on a vehicle;
**Figure 3** is a perspective view of a junction between a transverse element and an offside element according to an embodiment of the invention;
**Figure 4** is a perspective view of a junction between a frame and a nearside element according to an embodiment of the invention;
**Figure 5** is a perspective view of an attachment portion according to an embodiment of the invention;
**Figure 6** is a perspective view of an alternative attachment portion according to another embodiment of the invention;
**Figure 7** is a perspective view of a nearside mounting according to an embodiment of the invention;
**Figure 8** is a perspective view of an alternative nearside mounting according to an embodiment of the invention;
**Figure 9** is a perspective view of a roof rack according to an embodiment of the invention in use on a vehicle;
**Figure 10** is a perspective view of an outer tube and a nearside member junction in accordance with an embodiment of the invention;
**Figure 11** is a perspective view of a roof rack according to an embodiment of the invention in use on a vehicle;
**Figure 12** is a perspective view of a holding feature according to an embodiment of the invention.

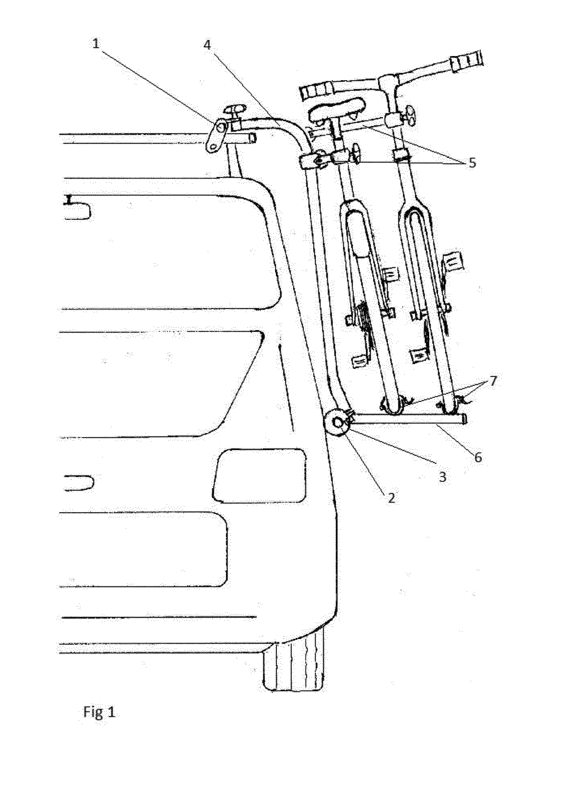

Figure 1 shows a rack according to an embodiment of the invention in the loading position and carrying two bicycles. The offside element (1) is attached to the roof bars, the nearside element (2) with its padding (3) tipped down and resting on the side of the vehicle and the connecting transverse elements (4) shaped so as to maintain clearance from the side of the vehicle. Also shown are clamp tubes (5) on the transverse elements and the bicycle wheel attachment frame (6) with its wheel channels (7).

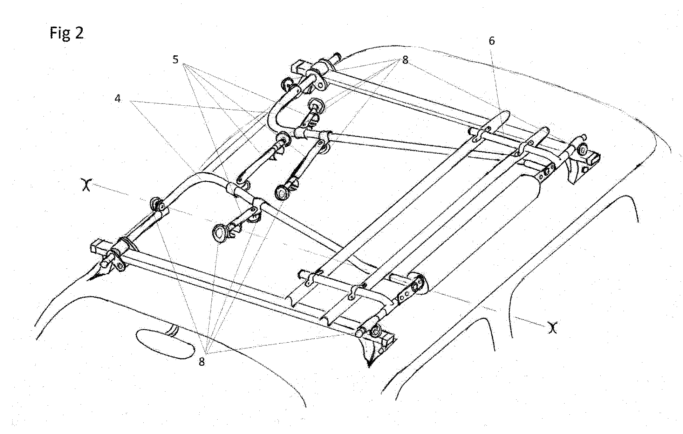

Figure 2 shows a rack in the secured position on the roof with the transverse elements (4), clamp tubes (5) and bicycle wheel frame (6) folded downwards. The axial alignment of the near and off side pivots to the transverse element are also shown by the centre line (X - X). Fixings intended for adjustment when fitting loads are secured with hand wheels (8) rather than nuts.

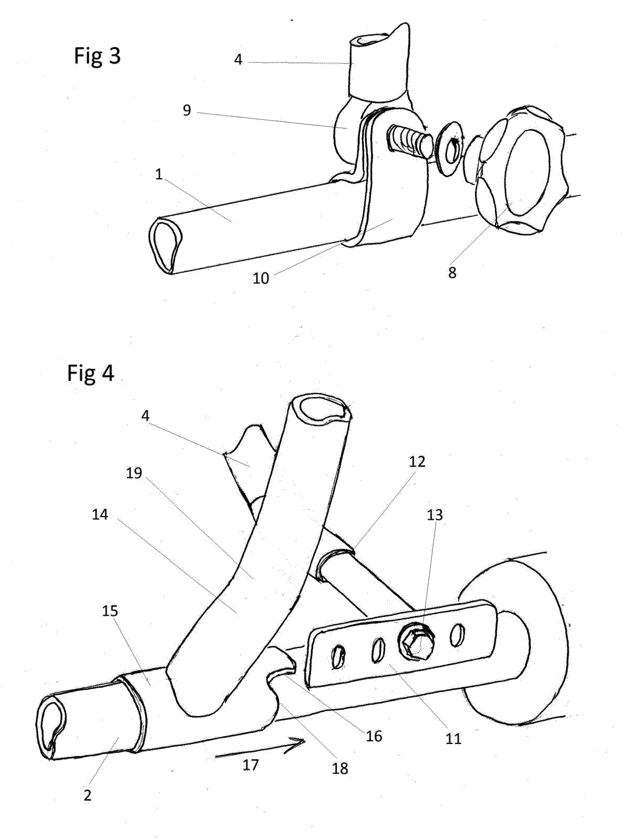

Figure 3 shows details of the pivoting junction between a transverse element (4) and the offside element (1) which comprises an end lug and stud (9) a clamp (10) and a hand wheel (8). This arrangement allows the clamps to be loosened and the transverse elements positioned longitudinally on the offside element to suit attachment points to the load. The hand wheel (8) allows the user to lock the transverse element to the offside element pivoted into either the upright or folded down position.

Figure 4 shows details of the transverse element (4) junction with the nearside element (2) by means of a plate (11) fixed to the nearside element and having several attachment holes with which to vary the longitudinal position of the junction. The transverse element has 2 coaxial parts threaded to each other at joint (12) to allow for adjustment of the rack width. This end of the transverse element is fitted with a threaded insert for fixing to the plate with a bolt (13). The joint (12) and the axially aligned end lug stud (9) allows the transverse elements to be folded downwards and rest upon the offside elements when fitted to the vehicle but not load carrying.

Figure 4 also shows the junction between the nearside element (2) and the arms (14) of the attachment frame (6). The sleeve (15) which forms the pivot for the arms is shown not fully assembled upon the nearside element, so that the travel stop (16) is visible. When fully assembled in the direction (17) this stop limits the rotational travel of the attachment frame by contact with plate (11) so that it is at the correct angle to load bicycles. The sleeve (15) also has a raised cam (18) which abuts the end of the plate (11) when rotated and assists in parking the frame in the loading or folded positions. The shape and materials of the attachment frame provide the required spring pressure to aid this parking action. There are slight bends (19) in the arms (14) to make the frame lie flat over the transverse elements (4) when both are folded.

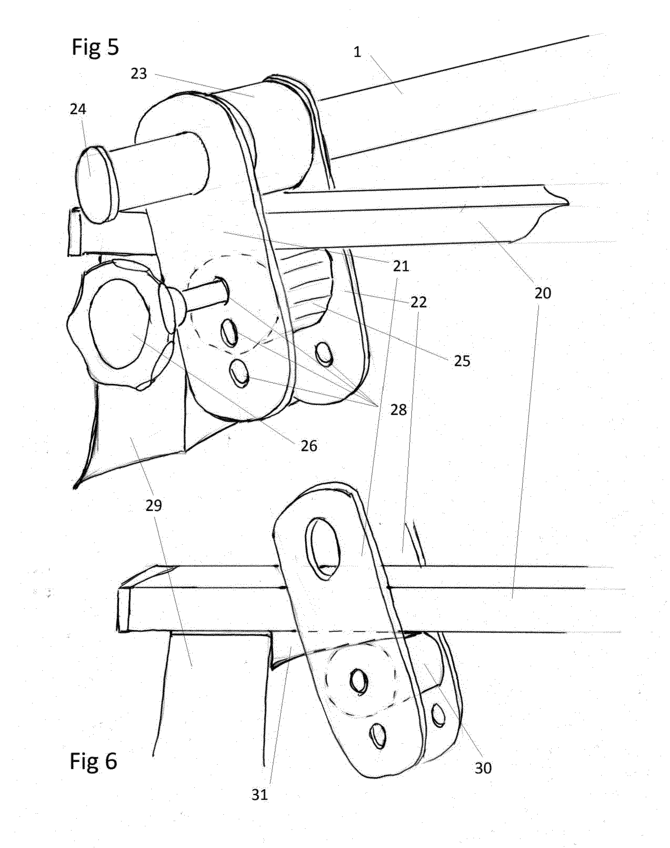

Figure 5 shows the front offside mounting which secures the offside element (1) to the roof bar (20). The rear mounting is similar. These mountings comprise of two end plates (21)(22) which have slightly convex inner faces adjacent to the roof bar sides and are a pivoting fit on the offside element (1) and contain between them a tough plastic roller (23) which rests on the roof bar. Caps (24) are fitted to the end of the offside element (1) to retain the mountings.

Below the roof bar a locking facet faced roller (25) is mounted eccentrically between the end plates (21)(22) and retained by a removable pin (26) which passes through the endplates and roller and screws into a captive nut on the outside of the inner endplate (22). The endplates have several matching pairs of holes (28) and captive nuts to accommodate different depth roof bars.

Also shown is a foot (29) for the attachment of roof bars to the vehicle. The locking roller (25) is slightly longer than the width of the roof bars to provide a good sliding clearance. When the rack is in the secured position this locking roller is rotated by finger and thumb so that its faceted circumference bears against the underside of the roof bar and the removable pin (26) is then tightened to clasp and lock the roller between the endplates thus securing the offside of the rack to the roof bars. When the removable pin (26) is loosened the roller falls away from the roof bar and the mountings with their side clearance offer little resistance to movement along the roof bars.

When used with roof bars made from extruded section metal with an undercut slot in their top faces these rolling offside mountings may be replaced with a sliding version. These may have a low friction sliding piece which fits into the slot and be fixed above to the nearside element by a plate or plates which pivot around the nearside element in like manner to the side plates mentioned above.

Figure 6 shows a variation of the offside mounting where the eccentric roller is replaced by a concentric roller (30) and a wedge (31) which is fixed to the underside of the roof bar. This wedge (31) is positioned so that when the rack is pushed into the secured position it is a tight fit between the roof bar and lower roller (30).

The design of the offside mountings allows the end plates (21)(22) to be separated for fitment to the roof bars and also allows them to be slid along the offside member (1) so as to align with roof bars separated by various distances. The tough plastic rollers (23) and lower rollers (25)(30) are slightly barrel shaped to allow the mountings to bear well on roof bars whose top and bottom faces are not perfectly horizontal as is often the case where roof bar fitments follow the curvature of the vehicle's roof.

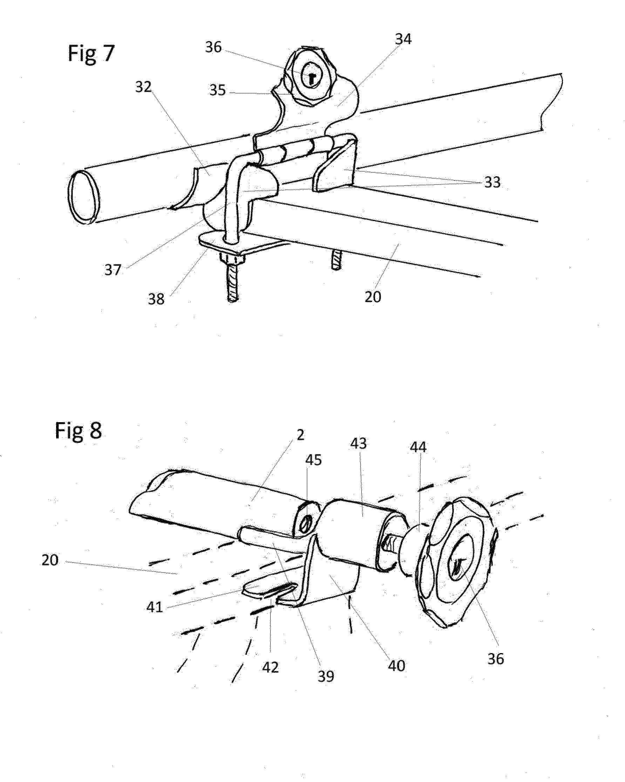

Figure 7 shows a nearside mounting all of which are identical. It comprises a shaped receiver plate (32) fixed to end plates (33) and a hinged clamp (34) which secures the nearside element (2) to the mounting by a hand wheel bolt (35) which passes through it and screws into a captive nut fixed to the receiver plate (32). The hand wheel may be fitted with locks (36) to secure the rack to the roof bars (20). The mounting is fixed to the nearside of the roof bars by double ended square shaped "U" bolts (37) which form the hinge pivot and pass through retainer plates (38) below the roof bars where it is secured by nuts. The length of the U bolts (37) allows for fitting to varying depth roof bars. The design of the nearside mountings allows them to clasp any part of the near side member (2) ends and so align with roof bars separated by various distances.

Figure 8 shows a variation on the nearside mountings, here the rear unit is shown and consists of shaped receiver (39) upon which the nearside element (2) rests and attached to it is a right angle bracket (40) which fits down one side of the roof bar (20) and has a substantially horizontal plate (41) with a slot (42) which allows it to fit between and be clasped by, the bottom of the roof bar and its proprietary attachment, shown by dotted lines. It has a side extension tube (43) which contains a shutter bolt and hand wheel (44) which slides into the nearside element (2) and screws into a threaded insert (45) fixed within the nearside element.

For security the hand wheel bolts (44) and other securing hand wheels may incorporate cylinder locks (36).

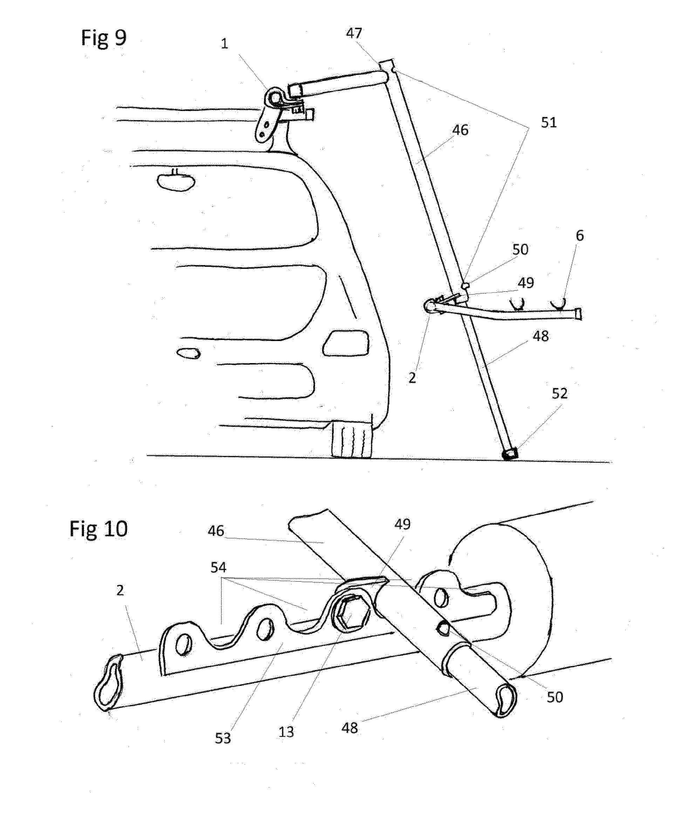

Figure 9 shows a version of the invention where each transverse element consists of two telescopic tubes, the outer tube (46) is attached to the offside element (1) by a short leg as in the previous version but has an angled joint (47) rather than a bend and contains a sliding inner tube (48) which when extended rests on the ground. The outer tube (46) has a lug (49) fixed to it towards its nearside end which is fixed to a plate on the nearside element (2) by a pivot bolt. (see Fig 10). The inner tube (48) contains a spring loaded button (50) which engages with holes (51) in the outer tube and locks the inner tube (48) in a retracted position when the rack is on the roof and in an extended position when the rack is in the loading position by the side of the vehicle as shown in Fig 9. There may be several holes (51) close to the near side to accommodate different height vehicles. The inner tube (48) has a rubber or plastic foot (52) to cushion ground contact.

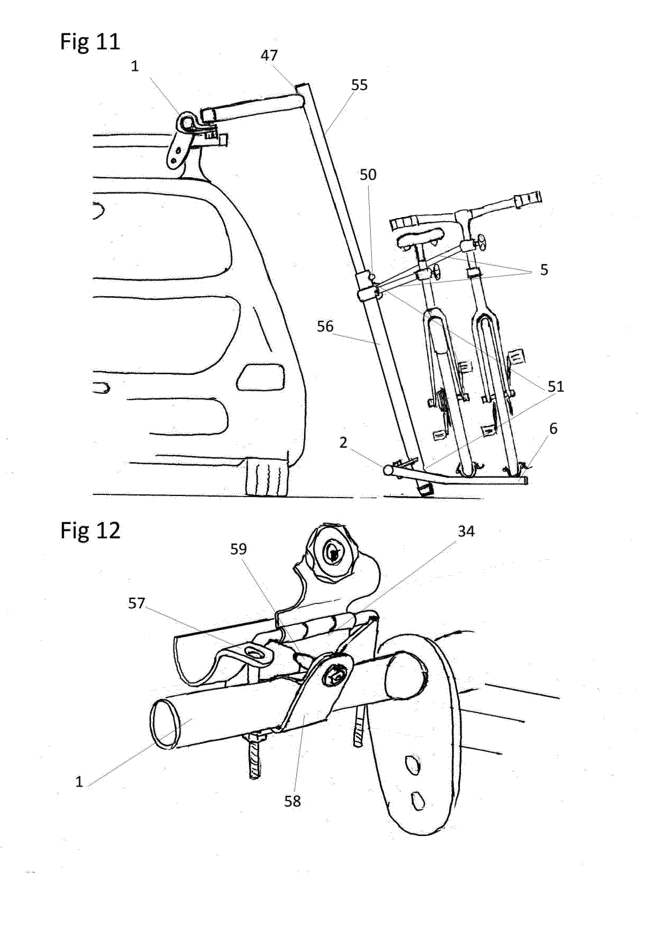

Figure 10 shows the junction between outer tubes (46) as described in Fig 9 and the nearside member. The lug (49) fixed to the outer tube (46) is attached by a pivot bolt (13) to a modified plate (53) which is fixed to the nearside element (2). The cutaways (54) in the Plate (53) accommodate the folded transverse element outer tubes (46). Also shown is a spring loaded button (50) locking the inner tube (48) in the extended position. Figure 11 shows a further variation of the rack with telescopic transverse elements. In this variation the portion of the transverse elements which attach to the offside element (1) again consists of a short leg joined by an angled joint (47) to a telescopic tube (55). However, in this case these tubes (55) are the smaller diameter inner telescopic tubes. The larger diameter outer tubes (56) carry the load or cycle attachment frame (6) and clamp tubes (5) and in the loading position they slide down to ground level. The nearside element (2) is also attached to the outer tubes (56) using the same method as shown in Fig 10.

As in the previous variation the inner tubes (55) contains a spring loaded button (50) which engages with holes (51) in the outer tube and locks the inner tube (55) in an extended or retracted position. To add rigidity and provide additional attachments for clamps these outer tubes may also be joined by an extra longitudinal tube fixed to each towards their offside/upper ends. This version may be fitted with tension springs or gas struts connecting the telescopically joined assemblies to aid translation between the loading and secured positions.

Figure 12 shows an additional holding feature that may be used in the variations according to Fig 9 and Fig 11. The nearside mounting has an additional lug (57) with a hole in it and there is an additional clamp (58) with a spigot (59) mounted on the offside element. When the offside element (1) is drawn horizontally to the nearside of the roof, the spigot (59) is brought close to the lug (57) as shown and when the rack is rotated downwards the spigot (59) engages with the hole in the lug (57) thus preventing horizontal movement of the offside element (1) and ensuring that the rack remains clear of the vehicle body.

In some embodiments use of the rack my be performed in the following manner: First proprietary roof bars are fitted to the vehicle and parallel to each other. On first use the rack is loosely assembled, the nearside mountings (33) or (40) are fitted to the roof bars close to the nearside attachments for the roof bars and the offside mounting endplates (21)(22) are separated and placed over the roof bars whilst the nearside element (2) is placed into the nearside mounting receivers (32)(39). The offside mounting end plates (21)(22) are then attached to each other by the removable pins (26) complete with lower rollers (25) or (30). The pins (26) are not fully tightened and use holes appropriate to the depth of the roof bars. If the concentric roller (30) is used then the wedges (31) are loosely fitted.

The transverse elements (4) are positioned along the near and offside elements in roughly the correct position to attach to the bicycles or other load to be carried. The transverse element (4) lengths are then adjusted at their screw joints (12) to place the near and offside mountings as close as possible to the roof bar attachments. The transverse elements (4) are left in the raised position and the clamp (10) and bolts (13) are tightened to lock their longitudinal positions in relation to the side elements (1)(2).

Next the rack it is placed in the loading position with the padding (3) resting against the vehicle side and the bicycles or other loads are secured using straps or over centre catches on the wheel channels and the adjustable attachment clamp tubes (5).

The attachment frame (6) is then grasped by a person and the rack raised away from the vehicle side and upwards until horizontal and then it is rolled across the roof bars and finally the nearside element (2) is lowered into the nearside mounting receivers (32) or (39) and secured by the hand wheels (35)(44). Final adjustments may then be made to the various adjustable fittings, including wedges (31) if used, all of which are then fully tightened. Thereafter, the transverse to nearside and offside fittings should need no further adjustment when used with the same vehicle and load.

To load the rack, bicycles wheels are placed into the channels (7) and secured by straps, clamps or catches and the bicycle frames are secured to the transverse elements (4) and or offside element (1) by clamp tubes (5). The loaded rack is raised and rolled across the roof bars and the nearside element (1) is placed into the mounting receiver (32) or (39) and secured in place by the hinged clamp (34) and hand wheel (35) or threaded insert (45) and hand wheel (44). The rack can then be locked in place by cylinder locks (36) fitted within hand wheels (35) or (44). The facet faced rollers (25), if used, are rotated to take up any clearance with the bottom of the roof bars and locked with removable pins (26).

When the rack is in the secured position but not loaded the offside to transverse element and clamp tube (5) hand wheels (8) may be loosened slightly and the transverse elements (4) and clamp tubes (5) folded flat. The design of the offside fittings will prevent the elements from going below the horizontal and hitting the roof. The nearside mounting hand wheels (35) or (44) can also be loosened slightly and the wheel attachment frame (6) folded over and down to rest upon the transverse elements (4). The slight bends (19) in the attachment frame arms (14) will allow the frame (6) to fold flat above the transverse elements(4).

The raised cams (18) assist in the parking of the attachment frame at its limits of travel. All hand wheels are then tightened. When the wheel attachment frame (6) is folded up and outwards again for use, the travel stops (16) make sure it is in the correct position.

When unloading the first variation with telescopic legs the spring loaded buttons (50) are depressed and the inner tubes (48) are extended until the buttons (50) engage holes (51) in the nearside of the outer tubes (46). The rack is then unlocked rolled and lowered as for the previous version but now rests on the ground via the telescopic tubes (46)(48). The lowering action also permits the spigots (59) to engage the holes in the lugs (57) and prevent the rack rolling back and contacting the vehicle body.

When unloading the second variation with telescopic legs the spring loaded buttons (50) are depressed and the outer tubes (56) complete with the frame (6) are extended until the buttons (50) engage holes (51) in the offside of the outer tubes (56). The rack is then lowered permitting the spigots (59) to engage the holes in the lugs (57) and the base of the extended outer tubes (56) to rest on the ground. In this instance the bicycles or other load are placed close to ground level.

When the telescopic versions are secured but not loaded the transverse elements (4) and frame (6) may be folded down as before. In this instance the nearside ends of the transverse elements (4) fit into the cutaways (54) in the plates (53).

When the rack is not required on the vehicle, it may be hung by the plastic rollers (23) from two hooks secured to a wall with the padding (3) resting against the wall.

The caps (24) stop the end plates (21)(22) from sliding off the rack. The rack may now be used to store bicycles or other loads against the wall.

## Claims

1. A roof rack comprising a chassis and at least one attachment portion, the chassis being rotationally attached to each attachment portion and each attachment portion being arranged in use to cooperate with a roof bar (20) traversing the width of a vehicle roof and where further each attachment portion is arranged in use to:
- be movable along the roof bar (20) with which it cooperates allowing displacement of the position of the chassis relative to the vehicle roof and,
- allow rotation of the chassis about the attachment portion to allow re-orientation of the chassis relative to the vehicle roof,
the combination of the displacement and re-orientation allowing the chassis to be moved between loading and secured positions.

2. A roof rack according to claim 1 where the chassis comprises a nearside tubular element (1) and an offside tubular element (2) that in use are orientated substantially perpendicular to the roof bars (20).

3. A roof rack according to claim 2 where the chassis comprises at least one transverse element (4) which spans and joins the nearside tubular element (1) and the offside tubular element (2).

4. A roof rack according to claim 3 where each transverse element (4) is angled.

5. A roof rack according to claim 3 or claim 4 where each transverse element (4) is shaped so that it has a change in direction along its longitudinal length.

6. A roof rack according to claim 4 or claim 5 where the shape of each transverse element (4) means that when in a loading position it projects from a plane defined by the nearside tubular element (1) and the offside tubular element (2).

7. A roof rack according to any of claims 3 to 6 where each transverse element (4) is rotatable from its loading position to a folded position in which it is in substantially the same plane as the nearside tubular element (1) and the offside tubular element (2).

8. A roof rack according to any preceding claim where the attachment portion comprises a load bearing roller (23) held between pairs of side plates (21, 22), where in use the load bearing roller (23) rests on top of the roof bar (20) allowing rolling displacement of the chassis, and the side plates (21, 22) are positioned about the roof bar (20), joined by a pin (26) that passes through matching holes in each side plate (21, 22), the side plates (21, 22) retaining the roller (23) on the roof bar (20).

9. A roof rack according to claim 8 where the offside element (2) passes through the side plates (21, 22) and through the centre of the load bearing roller (23) acting as an axle to allow rotation of the chassis about the attachment portion.

10. A roof rack according to any of claims 2 to 9 further comprising at least one nearside mounting arranged to receive the nearside element (1) when the chassis is in its secured position, the nearside mounting being attached in use to a nearside of a roof bar (20), each nearside mounting comprising a double ended square shaped "U" bolt (37) and a retainer plate (38) arranged to secure the roof bar (20) there between.

11. A roof rack according to claim 10 where the nearside mounting further comprises a securing means, attached in use to a nearside of a roof bar (20) and arranged to be capable of selectively securing and releasing the nearside element (1) when the chassis is in its secured position.

12. A roof rack according to any preceding claim which is adapted to allow fitment to different roof bar (20) arrangements.

13. A roof rack according to claim 12 where one or more of the following adaptations are made:
- when claim 12 depends from any of claims 3 to 7, where the roof rack is arranged so that the joint between the transverse element (4) and the nearside tubular element (1) and/or the offside tubular element (2) is adjustable so as the transverse element (4) may be positioned at various points along said nearside tubular element (1) and offside tubular element (2).
- when claim 12 depends from claim 8 or 9, the side plates (21, 22) contain multiple pairs of matching holes at different distances from the load bearing roller (23), each pair capable of receiving the pin (26), such that in use the attachment portion is capable of accommodating roof bars (20) of different thicknesses.
- when claim 12 depends from claim 8 or 9, the side plates (21, 22) are a loose fitting on the offside element (2) allowing them to be positioned at different points along the offside element (2), such that in use the attachment portion is capable of accommodating roof bars (20) having different separations.
- when claim 12 depends from claim 10 the length of each "U" bolt (37) allows in use for fitting to varying depths of roof bars (20).
- when claim 12 depends from claim 11, the locking means is arranged to be capable of selectively securing and releasing the nearside element (1) at any point along its length, such that the locking means is capable of accommodating roof bars (20) having different separations.

14. A roof rack according to any of claims 2 to 13 comprising a bicycle support frame (6), said frame (6) comprising at least one arm (14) attached to the nearside element (1) and at least one channel (7) having a substantially perpendicular orientation to the arm (14), the channel (7) having moveable securing means for bicycle wheels.

15. A roof rack according to claim 14 where each arm (14) of the frame (6) is attached to the nearside element (1) by rotational joints allowing the frame (6) to be moved between loading and folded positions.
